# EUROPEAN PATENT SPECIFICATION

(11) **EP 4 406 909 B1**
(45) Date of publication and mention of the grant of the patent: **25.06.2025**
(21) Application number: 24020032.9
(22) Date of filing: 22.01.2024
(51) Int. Cl.: B67C 3/30, C12L 11/00, B67D 1/08, C12G 3/07, C12H 1/22

(54) **DEVICE FOR FILLING AND EMPTYING WOODEN WINE BARRELS**
VORRICHTUNG ZUM FÜLLEN UND ENTLEEREN VON HOLZWEINFÄSSERN
DISPOSITIF POUR REMPLIR ET VIDER DES TONNEAUX DE VIN EN BOIS

(30) Priority: 30.01.2023 PT 2023118488
(43) Date of publication of application: 31.07.2024
(73) Proprietor: Dias Duque, Vasco Barreiros, 2500-815 Caldas Da Rainha (PT)
(72) Inventor: Dias Duque, Vasco Barreiros, 2500-815 Caldas Da Rainha (PT)
(74) Representative: Ferreira Magno, Fernando Antonio

(56) References cited:
- CN-A- 114 195 078
- ES-A1- 2 932 386
- US-A- 1 338 662
- US-A- 2 831 452
- US-A1- 2004 149 345

## Description

The present invention relates to a device for filling and emptying wooden wine barrels.

Wooden barrels or casks are normally used in the production of wine. Oak wood is used in the manufacture of barrels or casks intended for aging wine. Wine removes the soluble material from the wood, thus increasing its quality. The sizes of the barrels or casks that are used depending on the winemakers' criteria, depending on the quality of the wine to be obtained. The size of a common wine barrel is such that it can contain around two hundred and twenty-five litres. A consequence of this small volume of wooden barrels used in the wine industry is that many barrels are needed to be filled with wine. Large wineries can have thousands of these barrels. Filling such barrels with wine and after a period of storage or aging, the wine can be emptied and transferred to a stainless-steel storage container to allow for adjustments to it. The barrels are washed, and the barrels are refilled. All these production phases require filling and emptying the wine into and from wooden barrels.

It is widespread practice for industrial wineries to store wines in wooden barrels. As a wine ferments in a barrel, a layer of yeast sediment and lees forms at the bottom of the barrel. This layer can vary in thickness. It is desirable to remove the wine from this layer of sediment, as excessive contact time with the wine can negatively affect its quality, especially its flavours. It is widespread practice in the wine industry to transfer wines at intervals of approximately three months to avoid excessive contact time between the sediment layer and the wine in a barrel or to make the adjustments to the wine mentioned above. The wines are often aged in wooden barrels for six to twenty-four months. Consequently, this means that a wine needs to be transferred three to six or more times.

Currently, the operations of filling and emptying wooden wine barrels are conducted manually with the aid of funnels, jars and simple taps. There are some technical solutions available on the market to facilitate these operations, such as, for example, each comprising a simple filling valve associated, on the barrel side, with a cane-shaped tube, and on the other side with a filling hose; a filling system with automatic stop, when the barrel is full, called "PISTOBAR", with the same operating principle as the fuel pump pistols; an L-shaped part to remove wine from barrels; a system for emptying barrels that uses air injected into the vessel, called "BULLDOG". Patent CN 114195078 can also be referred to as being part of the prior art, which essentially claims an anti-drip component and a sealing arrangement for the barrel bung hole, said sealing arrangement having forced flexibility, which allows the its adaptation without leaks to the aforementioned barrel bung hole, as for the barrel filling and emptying system, it is similar to the "BULLDOG" system mentioned above.

Still regarding the operation of emptying the wine, which consists of inserting a tube through the barrel bung hole, the upper end of the tube being connected to a suction pump with an outlet connected by means of a hose to a storage container or another barrel. An inconvenience of this operation is that the lees in each barrel can be removed with the wine, or the wine is left with the lees into the barrel.

For the cellar to function efficiently, the barrels must be emptied as quickly as possible.

Another drawback of current emptying devices is the fact that a significant amount of wine remains in a barrel, that is, around two litres. If a wine is transferred four times, this can lead to a total waste of approximately ten litres or approximately 4.5% of the wine, which constitutes an economically significant loss.

The existing solutions on the market do not include filling and emptying functions in one piece as effective as those provided by the device for filling and emptying wooden wine barrels according to the present invention.

It is an object of this invention to provide a device for filling and emptying wooden wine barrels that solves or, at least, minimizes the drawbacks of devices for filling and emptying wooden wine barrels of the prior art.

This invention provides a device for filling and emptying wooden wine barrels comprising:
a tubular body, preferably made of stainless steel, in the shape of a cane, comprising, at its upper end, a tubular part, which has a first input and output connection arrangement;
an elbow tubular part, following said first tubular part;
a straight tubular part, following said elbow tubular part, the lower end of which has a first connection arrangement;
a frustoconical piece, coated with a film with sealing properties, arranged integrally around said straight tubular part;
a small diameter tubular piece (overflow pipe), which internally connects a first hole, arranged in the wall of said straight tubular part below said frustoconical piece, and a second hole, arranged above said frustoconical piece, said small diameter tubular piece extending outwards and the outer end of which has a second inlet and outlet connection arrangement;
a first tubular extension piece, the upper end of which has a second connection arrangement, suitable for being connected to said first connection arrangement, and the lower end of which has a bottom wall, which has in its centre a threaded hole, which serves support for a movable stop, the threaded rod of which moves in said threaded hole, with at least a third hole also being arranged in the side wall near to said lower end; and
which may further comprise an intermediate tubular extension piece, the upper end of which has a third connection arrangement, suitable for connection to the first connection arrangement, and a fourth connection arrangement, suitable for connection to the second connection arrangement.

Preferably, the device for filling and emptying wooden wine barrels comprises several intermediate tubular extension pieces.

Preferably, the frustoconical piece is covered with a silicone rubber film.

Preferably, the height of the straight tubular part varies between 220 mm and 255 mm, preferably 240 mm, even more preferably 247 mm.

Preferably, the height of the first tubular extension piece varies between 430 mm and 450 mm, preferably 440 mm.

Preferably, the height of the intermediate tubular extension piece varies between 235 mm and 255 mm, preferably 244 mm.

Preferably, the first and second input and output connection arrangements each comprise a male thread.

Preferably, the first and fourth connection arrangements each comprise a male threaded portion and the second and third connection arrangements each comprise a female threaded portion.

The device for filling and emptying wooden wine barrels according to the present invention has the following advantages:
Prevents loss of liquid and, therefore, dirtying the outside of the barrels, which, in the case of porous materials such as wood, ends up permanently staining the barrel,
Only one operator is needed to conduct the filling and emptying operations,
It is suitable for filling and emptying operations in barrels of diverse sizes, the emptying operation can be conducted using air under pressure or inert gas under pressure (protection against oxidation), which makes it possible to avoid the use of a transfer pump,
It is anti-foam, since the mobile stop can be adjusted below the liquid level, preventing the formation of foam,
It is hygienic, fast, easy to control the filling of containers and less tiring for the operator,
Does not require any external energy source to operate,
It is easy to store and transport as it is demountable,
It is durable and requires no maintenance costs, which allows a quick return on investment.

Although the device for filling and emptying wooden wine barrels, according to the present invention, was designed for wooden wine barrels, it can be used with any liquid container, if the container bung hole adjusts to its frustoconical piece.

The invention will be described with reference to a preferred embodiment illustrated in the accompanying drawings.

### Brief description of the drawings

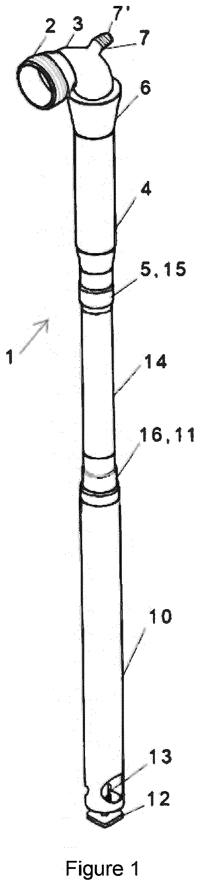

Figure 1 is a perspective view of the device for filling and emptying wooden wine barrels according to the invention with two tubular extension pieces.
Figure 2 is a sectional view of the device for filling and emptying wooden wine barrels of Figure 1.

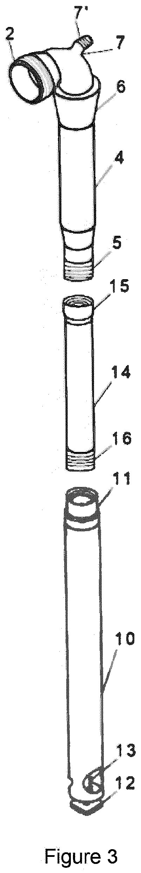

Figure 3 is an exploded perspective view of the device for filling and emptying wooden wine barrels of Figure 1 of the device for filling and emptying wooden wine barrels.

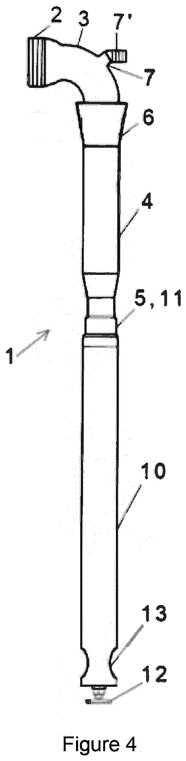

Figure 4 is an elevational view of the device for filling and emptying wooden wine barrels according to the invention with a tubular extension piece.
Figure 5 is a schematic view of the device for filling and emptying wooden wine barrels according to the invention inserted into a barrel.
Figure 6 is a schematic view of the filling operation using the device for filling and emptying wooden wine barrels according to the invention.
Figure 7 is a schematic view of the emptying operation using the device for filling and emptying wooden wine barrels according to the invention using a gaseous fluid under pressure.
Figure 8 is a schematic view of the filling operation using the device for filling and emptying wooden wine barrels of the invention using a suction pump.

### Detailed description of the invention

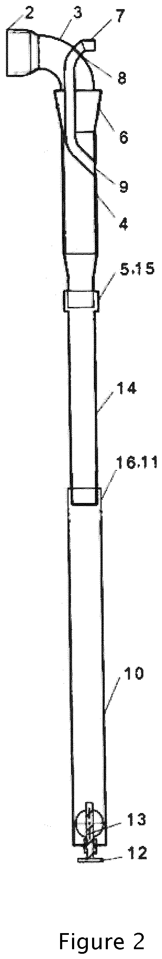

As shown in the figures, the currently preferred embodiment of the device for filling and emptying wooden wine barrels, comprises a tubular body 1 made of stainless steel, shaped like a cane, which comprises, at its upper end, a male threaded portion of inlet and outlet 2, followed by an elbow-shaped tubular part 3, preferably with an angle of 90°, followed by a straight tubular part 4, the end of which has a first male threaded portion 5, a frustoconical piece 6 coated with a silicone rubber film, arranged in a solid manner around the straight tubular part 4, near to the elbow-shaped tubular part 3, and a tubular piece (overflow pipe) 7 (see Figure 2) with a smaller diameter than the straight tubular part 4, which internally connects a first hole 8, arranged in the wall of the straight tubular part 4 below the frustoconical piece 6, and a second hole 9, arranged above the frustoconical piece 6, said tubular piece 7 extending towards exterior and whose outer end has a second male inlet and outlet threaded portion 7'.

The device for filling and emptying wooden wine barrels also comprises a tubular extension piece 10, the upper end of which has a second female threaded portion 11 and the lower end of which is closed by a flat bottom wall, which has a threaded hole in its centre where a movable stop 12 is screwed through its threaded rod, with two third holes 13 being also arranged on its side wall next to said closed lower end.

The device for filling and emptying wooden wine barrel may further comprise an intermediate tubular extension piece 14, the upper end of which has a third female threaded portion 15 and the lower end of which has a fourth male threaded portion 16.

The second female threaded portion 11 is suitable for being connected to the first male threaded portion 5 and the fourth male threaded portion 16, the third female threaded portion 15 being suitable for being connected to the first male threaded portion 5.

Depending on the diameter of the barrel to be filled and/or emptied, the device for filling and emptying wooden wine barrels will only use the tubular extension piece 10 or the tubular extension piece 10 and the intermediate tubular extension piece 14 or even the tubular extension piece 1 and several intermediate tubular extension pieces 14.

Operating mode of this embodiment of the device for filling and emptying wooden wine barrels.

### Filling operation

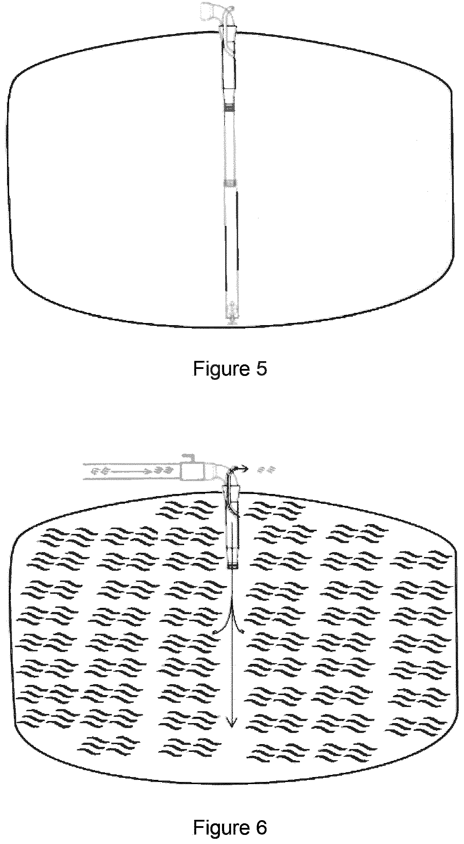

In this operation, only the upper part is used (see Figure 6) whose frustoconical piece 6 is adjusted and seals the barrel bung hole, being placed in communication with the straight tubular piece 4, the tubular piece in the form of a elbow 3 and the male threaded inlet and outlet portion 2, with the outside housing a female threaded portion of a passage valve, connected in turn to a filling hose. A transparent plastic hose (not shown) is introduced into another container and connected to the outer end of a second male inlet and outlet threaded portion 7' of the tubular piece 7. This tubular piece 7 functions as an overflow pipe, i.e. when the barrel fills, the pressure pushes the wine towards this tubular piece 7, when it is seen in the transparent plastic hose, said passage valve is closed. Any excess wine that may spill from the transparent plastic hose is collected in the other container into which the transparent plastic hose has been inserted.

### Emptying operation

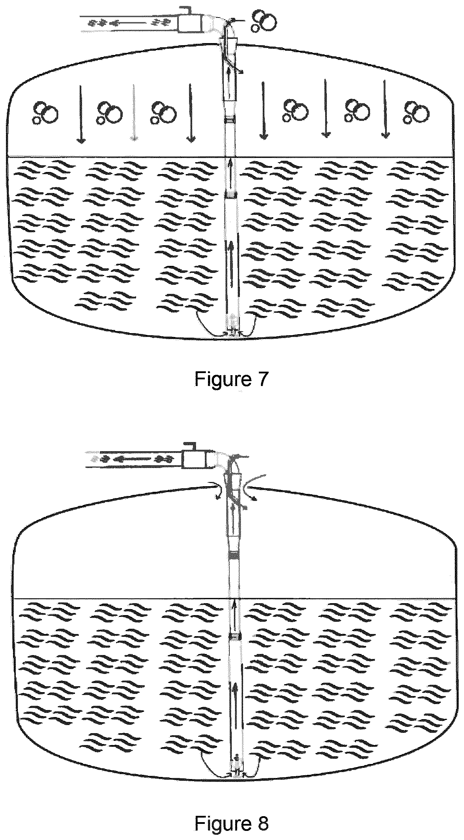

In this operation, gas under pressure is used (see Figure 7) or a suction pump is used (see Figure 8).

The suction pump is connected via a suction duct to a passage valve, which in turn is connected to the first inlet and outlet male threaded portion 2. Once the suction pump sucks up the wine from the inside from the barrel, air enters through the tubular piece 7.

When nitrogen is used to empty the barrel, a female threaded connection of a nitrogen supply pipe under pressure is connected to the second male threaded inlet and outlet portion 7' of the tubular piece 7. The pressure of the nitrogen is exerted on the free surface of the wine inside the barrel, which causes the wine to exit through the tubular body 1 through the first male threaded inlet and outlet portion 2, where a passage valve is connected, which is connected to an emptying conduit.

### Numerical references

- 1 -: Tubular body,
- 2 -: First threaded inlet and outlet portion,
- 3 -: Elbow tubular part,
- 4 -: Straight tubular part,
- 5 -: First threaded portion,
- 6 -: Frustoconical piece,
- 7 -: Tubular piece,
- 7' -: Second male threaded inlet and outlet portion,
- 8 -: First hole,
- 9 -: Second hole,
- 10 -: Tubular extension piece,
- 11 -: Second female threaded portion,
- 12 -: Movable stop,
- 13 -: Third hole,
- 14 -: Intermediate tubular extension piece,
- 15 -: Third female threaded portion,
- 16 -: Fourth male threaded portion.

## Claims

1. Device for filling and emptying wooden wine barrels comprising a tubular body (1) shaped like a cane, which comprises:
a first tubular part with a first inlet and outlet connection arrangement (2) at its upper end;
an elbow tubular part (3), following said first tubular part
a straight tubular part (4), following said elbow tubular part (3), the lower end of which has a first connection arrangement (5) ;
a frustoconical piece (6), covered with a film with sealing properties, arranged solidly around the straight tubular part (4), near to the elbow-shaped tubular part (3);
an extension tubular piece (10), the upper end of which has a second connection arrangement (11), suitable for connection to said first connection arrangement (5);
wherein the device for filling and emptying wooden wine barrels may also comprise an intermediate tubular extension piece (14), the upper end of which has a third connection arrangement (15), suitable for being connected to the first connection arrangement (5) and a fourth connection arrangement (16), suitable for be connected to the second connection arrangement;
**characterized in that** said tubular body (1) comprises a tubular piece (7) of smaller diameter than the straight tubular part, wherein said tubular piece (7) internally connects a first hole (9), arranged in the wall of the straight tubular part (4) below the frustoconical piece (6) and a second hole (8), arranged above the frustoconical piece (6), said tubular piece (7) extending outwards and whose outer end has a second input and output connection arrangement (7') and
**in that** the extension tubular piece (10) has a bottom wall at its lower end, which has a threaded hole in its centre, which serves as support for a movable stop (12), whose threaded rod is arranged to move in said threaded hole, and also being arranged in a side wall of the extension tubular piece (10) near to said lower end at least one third hole (13).

2. Device according to claim 1, **characterized in that** it comprises several intermediate tubular extension pieces.

3. Device according to claim 1, **characterized in that** the frustoconical piece (6) is covered with a silicone rubber film.

4. Device according to any of the preceding claims, **characterized in that** the height of the straight tubular part (4) varies between 220 mm and 255 mm, preferably 240 mm, more preferably 247 mm.

5. Device according to any of claims 1 and 2, **characterized in that** the height of the tubular extension piece (10) varies between 430 mm and 450 mm, preferably 440 mm.

6. Device according to any of claims 1 and 2, **characterized in that** the height of the intermediate tubular extension piece (14) varies between 235 mm and 255 mm, preferably 244 mm.

7. Device according to claim 1, **characterized in that** the first connection arrangement (5) and the fourth connection arrangement (16) each comprise a male threaded portion.

8. Device according to claim 1, **characterized in that** the second and third connection arrangements (11 and 15) each comprise a female threaded portion.

## Patentansprüche

1. - Vorrichtung zum füllen und entleeren von Holzweinfässern, aus denen ein tubulären Körper (1) wie ein Stock geformt wird, der umfasst:
ein erster tubulären Teil mit einem ersten Einlass und Auslass Verbindungsanordnung (2) am oberen Ende;
ein ellbogen tubulären Teil (3), der dem ersten tubulären Teil folgt;
ein gerader tubulären Teil (4), der dem ellbogen tubulären Teil (3) folgt, dessen untere Ende eine erste Verbindungsanordnung (5) hat;
ein Frustokonisches Stück (6), bedeckt mit einem Film mit versiegelungseigenschaften, das fest um den gerader tubulären Teil (4) in der nähe des ellbogen tubulären Teils (3) angeordnet ist;
ein verlängerung tubulären Stück (10), deren oberes Ende einen zweiten Verbindungsanordnung (11) hat, die für die verbindung zur ersten Verbindungsanordnung (5) geeignet ist;
wobei das Vorrichtung zum füllen und entleeren von Holzweinfässern auch ein zwischen tubulären verlängerung Stück (14) umfassen kann, dessen oberes Ende eine dritte Verbindungsanordnung (15) aufweist, die für die angeschlossene anordnung an die erste Verbindungsanordnung (5) und eine vierte Verbindungsanordnung (16) geeignet ist, die für die zweiten Verbindungsanordnung angeschlossen werden kann;
**dadurch gekennzeichnet dass** der tubulären Körper (1) ein tubulären Stück (7) mit kleinerem Durchmesser als der gerader tubulären Teil umfasst, wobei das tubulären Stück (7) innen eine erste Bohrung (9) verbindet ist, die in der Wand des gerader tubulären Teil (4) unterhalb des Frustokonisches Stück (6) angeordnet ist, und einer zweiten Bohrung (8), die oberhalb des Frustokonisches Stück (6) angeordnet ist, das tubulären Stück (7) sich nach außen erstreckt und dessen äußeres Ende eine zweite Einlass und Auslass Verbindungsanordnung (7') aufweist, und
dass die verlängerung tubulären Stück (10) an seinem unteren Ende eine Bodenwand aufweist, welches in seiner Zentrum eine Gewindebohrung aufweist, die als halterung für einen beweglichen Anschlag (12) dient, dessen Gewindestange so angeordnet ist dass sie sich in der Gewindebohrung bewegt kann, und außerdem ist in einer Seitenwand des verlängerung tubulären Stück (10) in der nähe des unteren Endes mindestens ein drittes Bohrung (13) angeordnet.

2. - Vorrichtung nach Ansprüch 1, **dadurch gekennzeichnet dass** sie mehrere zwischen tubulären verlängerung Stück umfasst.

3. - Vorrichtunge nach Ansprüch 1, **dadurch gekennzeichnet dass** die Frustokonisches Stück (6) mit einer Silikonkautschukfilm überzogen ist.

4. - Vorrichtung nach jeder vorhergehenden Ansprüche, **dadurch gekennzeichnet dass** die Höhe des gerader tubulären Teil (4) zwischen 220 mm und 255 mm, vorzugsweise 240 mm, mehr vorzugsweise 247 mm variiert.

5. - Vorrichtung nach jeder Ansprüch 1 und 2, **dadurch gekennzeichnet dass** die Höhe des verlängerung tubulären Stück (10) zwischen 430 mm und 450 mm, vorzugsweise 440 mm, variiert.

6. - Vorrichtung nach jeder Ansprüche 1 und 2, **dadurch gekennzeichnet dass** die Höhe des zwischen tubulären verlängerung Stück (14) zwischen 235 mm und 255 mm, vorzugsweise 244 mm, variiert.

7. - Vorrichtung nach Anspruch 1, **dadurch gekennzeichnet dass** die ersten Verbindungsanordnung (5) und die vierte Verbindungsanordnung (16) jeweils einen männlichen Gewindeabschnitt umfassen.

8. - Vorrichtung nach Anspruch 1, **dadurch gekennzeichnet dass** die zweite und dritte Verbindungsanordnung (11 und 15) jeweils eine weibliche Gewindeabchnitt umfasst.

## Revendications

1. - Dispositif pour remplier et vider des tonneaux de vin en bois comprenant un corps tubulaire (1) en forme de canne, qui comprend:
une première partie tubulaire avec une première disposition de connexion d'entrée et de sortie (2) à son extrémité supérieure;
une partie tubulaire coudée (3), suivant ladite première partie tubulaire;
une partie tubulaire droite (4), suivant ladite partie tubulaire coudée (3), dont l'extrémité inférieure a une première disposition de connexion (5);
une pièce tronconique (6), recouverte d'un film avec des propriétés d'étanchéité, disposé solidement autour de la partie tubulaire droite (4), près de la partie tubulaire en forme de coude (3);
une pièce tubulaire d'extension (10), dont l'extrémité supérieure a une deuxième disposition de connexion (11), approprié pour la connexion à ladite première disposition de connexion (5);
où le dispositif pour remplier et vider des tonneaux de vin en bois peut également comprendre une pièce d'extension tubulaire intermédiaire (14), dont l'extrémité supérieure a une troisième disposition de connexion (15), approprié pour être connecté à la première disposition de connexion (5) et une quatrième disposition de connexion (16), approprié pour être connecté à la deuxième disposition de connexion;
**caractérisé en ce que** ledit corps tubulaire (1) comprend une pièce tubulaire (7) de plus petit diamètre que la partie tubulaire droite, où ladite pièce tubulaire (7) se connecte internement a un premier trou (9), disposé dans la paroi de la partie tubulaire droite (4) sous la pièce tronconique (6) et un deuxième trou (8) disposé au-dessus de la pièce tronconique (6), ladite pièce tubulaire (7) s'étendant vers l'extérieur et dont l'extrémité extérieure comporte une deuxième disposition de connexion d'entrée et sortie (7')
et **en ce que** la pièce tubulaire d'extension (10) a une paroi de fond à son extrémité inférieure, qui a un trou fileté en son centre, qui sert de support pour une butée mobile (12), dont la tige filetée est disposée pour se déplacer dans ledit trou fileté, et également disposé dans une paroi latérale de la pièce tubulaire d'extension (10) près de ladite extrémité inférieure au moins un troisième trou (13).

2. - Dispositif selon la revendication 1, **caractérisé en ce qu'**il comprend plusieurs pièces d'extension tubulaires intermédiaires.

3. - Dispositif selon la revendication 1, **caractérisé en ce que** la pièce tronconique (6) est recouverte d'un film en caoutchouc de silicone.

4. - Dispositif selon quelconque des revendications précédentes, **caractérisée en ce que** la hauteur de la partie tubulaire droite (4) varie entre 220 mm et 255 mm, de préférence 240 mm, plus de préférence 247 mm.

5. - Dispositif selon quelconque des revendications 1 et 2, **caractérisée en ce que** la hauteur de la pièce d'extension tubulaire (10) varie entre 430 mm et 450 mm, de préférence 440 mm.

6. - Dispositif selon quelconque des revendications 1 et 2, **caractérisée en ce que** la hauteur de la pièce d'extension tubulaire intermédiaire (14) varie entre 235 mm et 255 mm, de préférence 244 mm.

7. - Dispositif selon la revendication 1, **caractérisé en ce que** la première disposition de connexion (5) et la quatrième disposition de connexion (16) comprennent chacun une portion filetée mâle.

8. - Dispositif selon la revendication 1, **caractérisé en ce que** les deuxième et troisième dispositions de connexion (11 et 15) comprennent chacune une portion filetée femelle.
